# EUROPÄISCHE PATENTSCHRIFT

(11) **EP 1 444 425 B1**
(45) Veröffentlichungstag und Bekanntmachung des Hinweises auf die Patenterteilung: **09.05.2007**
(21) Anmeldenummer: 02758114.9
(22) Anmeldetag: 23.07.2002
(51) Int. Cl.: F01N 3/22

(54) **VERFAHREN ZUR STEUERUNG DER SEKUNDÄRLUFTMENGE**
METHOD FOR CONTROL OF SECONDARY AIR AMOUNTS
PROCEDE DE REGULATION DE LA QUANTITE D'AIR SECONDAIRE

(30) Priorität: 02.11.2001 DE 10154081
(43) Veröffentlichungstag der Anmeldung: 11.08.2004
(73) Patentinhaber: ROBERT BOSCH GMBH, 70442 Stuttgart (DE)
(72) Erfinder: BOERKEL, Wolfgang, 71726 Benningen (DE)
(86) Internationale Anmeldenummer: PCT/DE2002/002697
(87) Internationale Veröffentlichungsnummer: WO 2003/040528

(56) Entgegenhaltungen:
- EP-A- 0 558 320
- DE-A- 2 402 663
- DE-A- 4 325 202
- US-A- 5 724 810
- US-A- 6 041 593
- PATENT ABSTRACTS OF JAPAN vol. 2000, no. 08, 6. Oktober 2000 (2000-10-06) & JP 2000 145432 A (TOYOTA AUTOM LOOM WORKS LTD), 26. Mai 2000 (2000-05-26)
- PATENT ABSTRACTS OF JAPAN vol. 017, no. 465 (M-1468), 25. August 1993 (1993-08-25) & JP 05 106431 A (MITSUBISHI MOTORS CORP), 27. April 1993 (1993-04-27)

## Beschreibung

### Hintergrund der Erfindung

Die Erfindung betrifft ein Verfahren zur Steuerung der Sekundärluftmenge eines Kraftfahrzeugs mit einer Einrichtung zur Sekundärlufteinblasung nach dem Oberbegriff des Anspruchs 1.

Das Einblasen von zusätzlicher Luft direkt nach dem Brennraum führt zu einer Nachverbrennung des heißen Abgases. Diese "exotherme Reaktion" reduziert einerseits die Abgasbestandteile Kohlenwasserstoff (HC) und Kohlenmonoxid (CO) und erwärmt andrerseits den Katalysator.

Hierdurch wird die Konvertierungsrate in der Warmlaufphase des Katalysators wesentlich gesteigert, was insbesondere für Fahrzeuge mit sehr niedrigen Emissionen erforderlich ist.

Bei aus dem Stand der Technik bekannten Verfahren wird die Sekundärluft schlagartig zugeschaltet.

Darüber hinaus sind Sekundärlufteinblasungen der Anmelderin bekannt, bei denen steuerbare Sekundärluftpumpen mit eigener Luftmassenmessung zum Einsatz kommen. Die Luftmasse wird dann vorzugsweise mit einer Rampe aufgesteuert, deren Steigung applizierbar, aber konstant ist.

Problematisch bei bekannten Sekundärlufteinblasungen und Verfahren zur Steuerung der Sekundärluftmenge ist es, dass die Sekundärluftmenge nicht auf den Heizfortschritt im Katalysator anpassbar ist. Hieraus resultiert eine nicht optimale Konvertierungsrate, die in Extremfällen sogar dazu führen kann, dass Schadstoffe, beispielsweise Kohlenwasserstoffe (HC) in das Abgas gelangen (so genannte Kohlenwasserstoff (HC)-Durchbrüche).

Aus der US 5,724,810 ist ein Verfahren bekannt geworden, bei welchem eine Heizeinrichtung für die Sekundärluft, eine Heizeinrichtung für Abgase sowie eine Heizeinrichtung für einen Katalysator sowie eine Abssasbypaß-Passage vorgesehen sind. Die mittels der Sekundärlufizufuhr zugeführte geheizte Luft wird so gesteuert, dass ein optimales Lambda im Katalysator bei einem vorgegebenen Motorlambda erzeugt wird. Der Katalysator wird auf diese Weise passiv von außen beheizt. Das Heizen des Katalysators wird beendet, wenn die aus dem Katalysator austretende Luft nicht mehr deutlich kälter ist als die eintretende. Die zugeführte Sekundärluft wird abhängig vom Betriebspunkt der Brennkraftmaschine gewählt, sie wird reduziert, um den Katalysator nicht zu überhitzen.

Dokument US 6 041 593 A offenbart ein Verfahren zur Steuerung der Sekundärluftmenge einer Brennkraftmaschine wobei die Sekundärluftmenge in Abhängigkeit von der Temperatur des Katalysators zugeführt wird.

Aufgabe der Erfindung ist es, ein Verfahren zur Steuerung der Sekundärluftmenge der gattungsgemäßen Art derart weiterzubilden, dass durch die Einblasung von nicht beheizter Sekundärluft eine Optimierung der Beheizung des Katalysators und so eine bessere Konvertierungsrate in der Warmlaufphase erzielt werden kann als bei bekannten Sekundärlufteinblasungen. Hierdurch sollen einerseits Schadstoffemissionen, insbesondere Kohlenwasserstoff(HC)-Durchbrüche, vermieden werden, andererseits soll die Aufheizung des Katalysators optimiert, das heißt beschleunigt werden.

### Zusammenfassung der Erfindung

Die Aufgabe wird bei einem Verfahren zur Steuerung der Sekundärluftmenge eines Kraftfahrzeugs der eingangs beschriebenen Art dadurch gelöst, dass die Steigerung der eingeblasenen Sekundärluftmenge in Abhängigkeit von den Startbedingungen und von dem durch Modellierung und/oder Messung bestimmten Aufheizverlauf des Katalysators zeitlich veränderbar erfolgt. Hierdurch wird ein optimiertes Heizen des Katalysators ermöglicht. Daraus resultiert ein sicheres Erreichen der Grenzwerte der Schadstoffe im Abgas. Insbesondere kann auf zusätzliche Heizmaßnahmen wie Brenner oder E-Katalysatoren, also elektrisch beheizbare Katalysatoren verzichtet werden oder deren Potential besser ausgenutzt werden.

Vorteilhaftenveise wird dabei auch der Beginn der Sekundärluftförderung abhängig von folgenden Startbedingungen gewählt: Umgebungstemperatur; Motortemperatur; durch Messung oder Modellierung bestimmte Katalysatortemperatur; sowie eventuell Temperatur einer Katalysator-Zusatzheizung, sofern eine solche vorhanden ist.

In diesem Falle wird die Steigerung der Sekundärluftmenge unmittelbar nach Beginn der Sekundärluftförderung abhängig von diesen Startbedingungen gewählt.

Wenn der Aufheizverlauf des Katalysators, dessen Temperatur zum Beispiel aus dem Temperaturmodell oder der Messung bestimmt wird, schnell voranschreitet, wobei unter Aufheizverlauf z.B. die Temperatur des Katalysators, das Temperaturprofil des Katalysators, das durchwärmte Katalysatorvolumen, das konvertierende Katalysatorvolumen oder der Heizfortschritt des Katalysators zu verstehen ist, wird die zeitliche Änderung der Sekundärluftfördermenge erhöht, so dass sich ein progressiver Verlauf ergibt.

Wenn dagegen der Aufheizverlauf des Katalysators, zum Beispiel aufgrund ungünstiger Wärmeabfuhr, nur langsam erfolgt, wird die zeitliche Änderung der Sekundärluftfördermenge verringert - oder anders ausgedrückt, es wird eine degressive Aufsteuerung des Sekundärluftmassenstroms eingestellt.

Bei einer besonders vorteilhaften Ausführungsform erfolgt zunächst ein progressiver Verlauf der zeitlichen Änderung der Sekundärluftfördermenge, der dann stetig in einen degressiven Verlauf übergeht.

Vorteilhafterweise wird dabei die zeitliche Änderung des der Brennkraftmaschine des Fahrzeugs zugeführten fetten Gemisches in qualitativer oder quantitativer Hinsicht in der gleichen Weise gewählt wie die zeitliche Änderung der Sekundärluftfördermenge, das bedeutet, dass das Luft-Kraftstoffverhältnis nach Zuführung der Sekundärluft stets im für die Aufheizung optimalen Bereich gehalten wird. Dieser liegt knapp über 1= 1, z.B. bei I = 1,1, da das Luft-KraftstoffVerhältnis auch aufgrund von Systemtoleranzen keinesfalls unter 1 = 1 fallen darf, was zu einer massiven Kohlenwasserstoff(HC)-Entstehung führt, andererseits jedoch ein zu großer Luftüberschuss (1 >> 1)das Temperaturniveau des Abgases senkt.

### Kurzbeschreibung der Zeichnungen

Weitere Vorteile und Merkmale der Erfindung sind Gegenstand der nachfolgenden Beschreibung sowie der zeichnerischen Darstellung von Ausführungsbeispielen. In der Zeichnung zeigen:
- Figur 1: eine aus dem Stand der Technik bekannte Sekundärlufteinblasung;
- Figur 2: den aus dem Stand der Technik bekannten Sekundärluftmassenstrom über der Zeit;
- Figur 3a, b: ein erstes Ausführungsbeispiel des Sekundärluftmassenstroms über der Zeit gemäß der Erfindung und
- Figur 4: ein weiteres Ausführungsbeispiel des Sekundärluftmassenstroms über der Zeit gemäß der Erfindung.

### Detaillierte Beschreibung der Ausführungsbeispiele

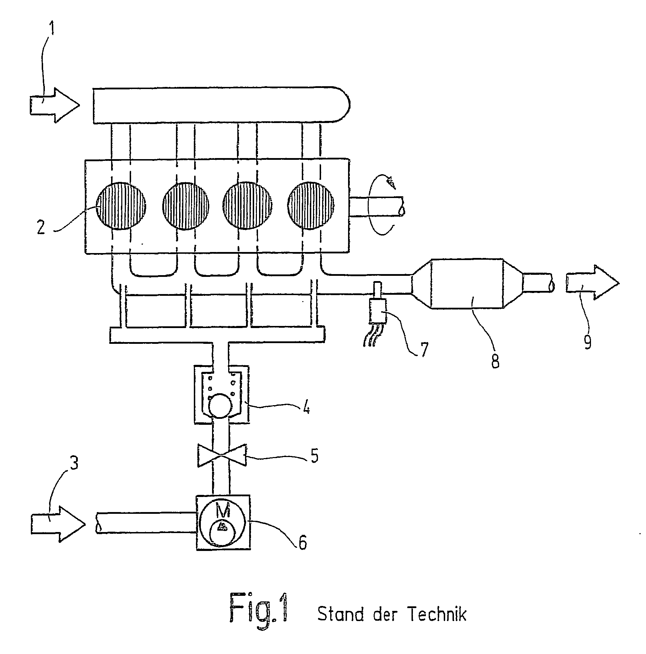

Eine Brennkraftmaschine 2 mit einer Sekundärlufteinblasung wird nachfolgend in Verbindung mit Figur 1 beschrieben. Die Brennkraftmaschine 2, der Ansaugluft 1 zugeführt wird, weist eine im Abgaskanal angeordnete Lambdasonde 7 sowie einen Katalysator 8 auf, der mit möglichst optimaler Konvertierungsrate arbeiten soll, um schädliche Abgasbestandteile im Abgas 9 zu vermeiden. Der Brennkraftmaschine 2 wird Sekundärluft 3 zugeführt durch eine beispielsweise elektrische Sekundärluftpumpe 6, welche die Sekundärluft über ein Sekundärluftventil 5 und ein Rückschlagventil 4 direkt nach dem Brennraum der Brennkraftmaschine 2 zuführt. Das Einblasen von zusätzlicher Luft direkt nach dem Brennraum führt zu einer Nachverbrennung des heißen Abgases. Die dabei entstehende exotherme Reaktion reduziert einerseits die Abgasbestandteile Kohlenwasserstoff (HC) und Kohlenmonoxid (CO) und erwärmt andrerseits den Katalysator. Durch die Erwärmung des Katalysators wird die Konvertierungsrate in der Warmlaufphase des Katalysators wesentlich gesteigert.

Eine Möglichkeit den Katalysator schnell auf Betriebstemperatur zu bringen, was insbesondere für Fahrzeuge mit sehr niedrigen Emissionen erforderlich ist, besteht nun darin, einerseits den Motor fett zu betreiben, andrerseits, wie oben beschrieben, Sekundärluft direkt nach dem Brennraum einzublasen.

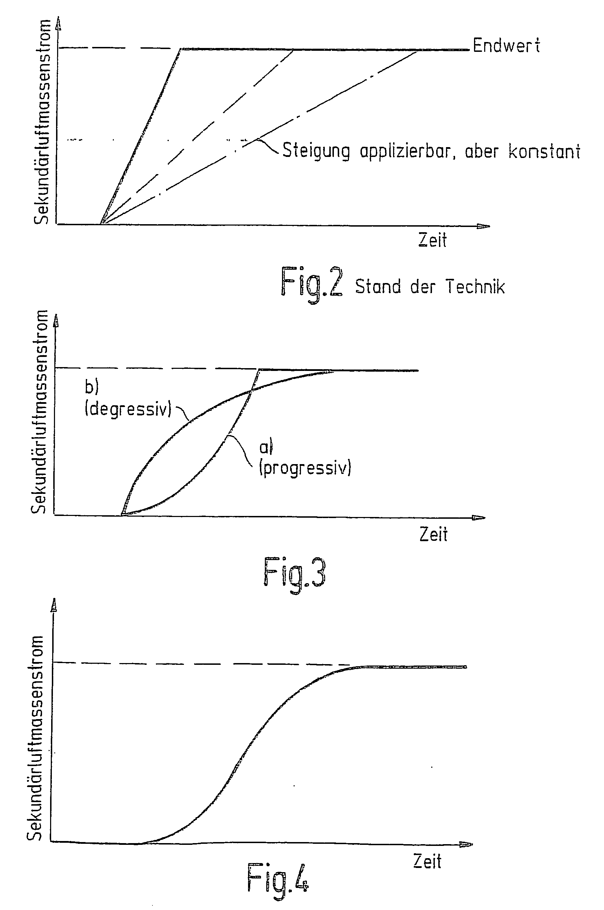

Bei aus dem Stand der Technik bekannten Sekundärlufteinblasungen wird die Sekundärluft schlagartig zugeführt. Bei neueren Anwendungen der Anmelderin kommen steuerbare Sekundärluftpumpen mit eigener Luftmassenmessung zum Einsatz. Die Luftmasse wird dann vorzugsweise - wie in Fig.2 schematisch dargestellt - mit einer Rampe aufgesteuert, deren Steigung applizierbar ist. Diese Steigung trägt aber dem gesamten Heizverlauf und den Voraussetzungen beim Start nicht in optimaler Weise Rechnung.

Es ist daher Grundidee der vorliegenden Erfindung, den Beginn der Sekundärluftförderung und die anfängliche Steigerung des Massendurchsatzes variabel und von den Startbedingungen abhängig zu gestalten sowie die Steigung der "Rampe" zur Aufsteuerung der Sekundärluftpumpe zeitlich variabel und vom Heizfortschritt im Katalysator abhängig zu gestalten. Hierzu wird der Beginn der Sekundärluftförderung abhängig von Umgebungs- und Startbedingungen gewählt, beispielsweise von der Umgebungstemperatur und von der Starttemperatur der Brennkraftmaschine sowie deren Vorgeschichte. Unter Berücksichtigung der Vorgeschichte wird die Prüfung verstanden, ob ein Wiederholstart vorliegt, bei dem der Katalysator bereits eine Temperatur aufweist, die von der eines ersten Starts der Brennkraftmaschine abweicht, nämlich größer ist. Aus diesem Grunde wird die Katalysatortemperatur beispielsweise durch ein Katalysatortemperaturmodell oder durch eine Messung erfasst. Sofern eine Zusatzheizung, zum Beispiel ein elektrisch erwärmbarer Katalysator oder ein Brenner oder dergleichen, vorhanden ist, werden auch deren Startbedingungen erfasst. Es versteht sich, dass weitere, die Katalysatortemperatur beeinflussende Größen berücksichtigt werden können.

Abhängig von diesen Startbedingungen wird auch die Steigerung der Sekundärluftmenge unmittelbar nach Beginn der Sekundärluftförderung zeitlich veränderbar gewählt.

Die Steigerung der eingeblasenen Sekundärluftmenge wie auch die Steigerung bzw. Anfettung des der Brennkraftmaschine zugeführten fetten Luft-Kraftstoff-Gemisches erfolgt danach in Abhängigkeit von der durch Modellierung und/oder Messung bestimmten Temperatur des Katalysators oder anders ausgedrückt in Abhängigkeit vom Heizfortschritt im Katalysator zeitlich veränderbar.

Hierdurch wird ein optimiertes Katalysatorheizen und dadurch ein sicheres Erreichen der Grenzwerte erzielt.

Insbesondere bei Fahrzeugen mit sehr niedrigen Emissionsgrenzwerten ist es zwingend, die Beheizung des Katalysators zu optimieren, da der Katalysator vor Beginn der Fahrt des Fahrzeugs seine zur Konvertierung erforderliche Betriebstemperatur aufweisen muss. Dabei darf jedoch das Kraftstoffluftgemisch nicht zu schnell zugesetzt werden, da es sonst zu so genannten HC-Durchbrüchen, das heißt zu Kohlenwasserstoffen (HC) im Abgas nach dem Katalysator kommen kann und so die vorgeschriebenen Grenzwerte der Abgasbestandteile nicht mehr eingehalten werden können.

In vielen Fällen wird es so sein, dass zunächst nur ein kleiner Teil des Katalysators oder der Katalysatoren durch die üblichen Heizmaßnahmen (später Zündzeitpunkt, frühes Öffnen des Auslasses, externe Beheizung) die zum Konvertieren erforderliche Temperatur erreicht. In diesem Falle darf anfänglich nur wenig fettes Gemisch und wenig Sekundärluft bereitgestellt werden, da es sonst zu den oben beschriebenen HC-Durchbrüchen kommen kann. Durch die Umsetzung dieses Gemisches steigt die Temperatur im Katalysator und auch dessen konvertierendes Volumen schnell an. Die Sekundärluftmasse und das fette Gemisch können sehr schnell gesteigert werden, ein progressiver Verlauf des Sekundärluftmassenstroms, wie in Figur 3a dargestellt, ist möglich. Auf diese Weise wird der Katalysator/die Katalysatoren schneller durchgeheizt, so dass ein sicheres Konvertieren beim Losfahren möglich ist und hierdurch zusätzliche Heizmaßnahmen (beispielsweise E-Katalysator oder Brenner) entbehrlich sind.

In Figur 3b ist der Sekundärluftmassenstrom über der Zeit bei einem Fahrzeug dargestellt, bei dem sich trotz umgesetzter chemischer Energie - das heißt Bereitstellen eines fetten Gemisches und Sekundärluft - der Katalysator zum Beispiel infolge hoher Wärmeverluste an die Umgebung nicht wie gewünscht erwärmt. In diesem Falle wird die Sekundärluft und auch das fette Gemisch nur degressiv aufgeregelt, das heißt es wird die Steigerung der Sekundärluftfördermenge über die Zeit verringert. Durch diesen degressiven Verlauf werden HC-Durchbrüche verhindert, wodurch das gesamte System robuster gegenüber externen Einflüssen wird. Auf diese Weise sind ebenfalls weniger zusätzliche Heizmaßnahmen erforderlich, bei denen ebenfalls die Gefahr von HC-Durchbrüchen besteht.

In den meisten Fällen wird eine Kombination der Verläufe des Sekundärluftmassenstromes über der Zeit gemäß Figur 3a, 3b erforderlich sein, was im folgenden in Verbindung mit Figur 4 erläutert wird. Zunächst erfolgt die zeitliche Änderung der Sekundärluftfördermenge und des fetten Gemisches progressiv, um dann in einen degressiven Verlauf überzugehen. Es versteht sich, dass mit einer veränderlichen Steigung der "Rampe" jede beliebige Kombination aus den vorbeschriebenen Möglichkeiten, also ein beliebiger Verlauf des Sekundärluftmassenstroms möglich ist. Der Beginn der Heizmaßnahmen und die anfängliche Steigung des Sekundärluftmassenstroms hängen von den vorbeschriebenen Randbedingungen, das heißt insbesondere auch davon ab, ob ein Start oder ein Wiederholstart vorliegt.

## Patentansprüche

1. Verfahren zur Steuerung der Sekundärluftmenge eines Kraftfahrzeugs mit einer Einrichtung zur Sekundärlufteinblasung, wobei die Steigerung der eingeblasenen Sekundärluftmenge in Abhängigkeit von den Startbedingungen des Kraftfahrzeugs zeitlich veränderbar erfolgt, **dadurch gekennzeichnet, dass** die zeitliche Änderung der Sekundärluftfördermenge dem modellierten oder gemessenen Aufheizverlauf des Katalysators angepasst wird, wobei eine Aufsteuerung der Sekundärluftmenge in Abhängigkeit von der Durchwärmung des Katalysators erfolgt.

2. Verfahren nach Anspruch 1, **dadurch gekennzeichnet, dass** die Aufsteuerung der Sekundärluftmenge in Abhängigkeit von der Durchwärmung des Katalysators progressiv und/oder degressiv erfolgt.

3. Verfahren nach einem der Ansprüche 1 oder 2, **dadurch gekennzeichnet, dass** zunächst ein progressiver Verlauf der zeitlichen Änderung der Sekundärluftfördermenge und dann in diesen stetig übergehend ein degressiver Verlauf der zeitlichen Änderung der Sekundärluftfördermenge erfolgt.

4. Verfahren nach einem der vorstehenden Ansprüche, **dadurch gekennzeichnet, dass** der Beginn der Sekundärluftförderung abhängig von folgenden Startbedingungen gewählt wird: Umgebungstemperatur und/oder Motortemperatur, durch Messung oder Modellierung bestimmte Katalysatortemperatur.

5. Verfahren nach Anspruch 4, **dadurch gekennzeichnet, dass** die Steigerung der Sekundärluftmenge unmittelbar nach Beginn der Sekundärluftförderung abhängig von den Startbedingungen zeitlich veränderbar gewählt wird.

6. Verfahren nach einem der vorstehenden Ansprüche, **dadurch gekennzeichnet, dass** die zeitliche Änderung des der Brennkraftmaschine des Fahrzeugs zugeführten fetten Gemisches in der gleichen Weise vorgenommen wird wie die zeitliche Änderung der Sekundärluftfördermenge.

## Claims

1. Method for controlling the secondary air quantity of a motor vehicle having a device for secondary air introduction, the secondary air quantity introduced being increased variably with time as a function of the starting conditions of the motor vehicle, **characterized in that** the variation with time of the secondary air delivery quantity is adapted to the modelled or measured heating-up profile of the catalytic converter, with the secondary air quantity being increased as a function of the warming of the catalytic converter.

2. Method according to Claim 1, **characterized in that** the secondary air quantity is increased progressively and/or degressively as a function of the warming of the catalytic converter.

3. Method according to one of Claims 1 or 2, **characterized in that** there is firstly a progressive profile of the variation with time of the secondary air delivery quantity and then, merging continuously into the latter, a degressive profile of the variation with time of the secondary air delivery quantity.

4. Method according to one of the preceding claims, **characterized in that** the beginning of the secondary air delivery is selected as a function of the following starting conditions: ambient temperature and/or engine temperature; by measuring or modelling a certain catalytic converter temperature.

5. Method according to Claim 4, **characterized in that** the increase in the secondary air quantity directly after the beginning of the secondary air delivery is selected so as to be variable with time as a function of the starting conditions.

6. Method according to one of the preceding claims, **characterized in that** the variation with time of the rich mixture supplied to the internal combustion engine of the vehicle takes place in the same way as the variation with time of the secondary air delivery quantity.

## Revendications

1. Procédé de commande de la quantité d'air secondaire d'un véhicule automobile avec une installation d'insufflation d'air secondaire, l'augmentation de la quantité d'air secondaire insufflée pouvant être modifiée dans le temps en fonction des conditions de démarrage du véhicule automobile,
**caractérisé en ce que**
la modification dans le temps de la quantité d'air secondaire acheminée est adaptée au gradient de chauffage modélisé ou mesuré du catalyseur, la quantité d'air secondaire étant augmentée en fonction du réchauffement à coeur du catalyseur.

2. Procédé selon la revendication 1,
**caractérisé en ce que**
la quantité d'air secondaire est commandée progressivement et/ou dégressivement en fonction du réchauffement à coeur du catalyseur.

3. Procédé selon l'une des revendications 1 ou 2,
**caractérisé en ce que**
la quantité d'air secondaire acheminée est d'abord modifiée de façon progressive dans le temps puis sans interruption de façon dégressive dans le temps.

4. Procédé selon l'une des revendications précédentes,
**caractérisé en ce qu'**
on choisit le début de l'acheminement d'air secondaire en fonction des conditions de démarrage suivantes : température ambiante et/ou température du moteur ; mesure ou modélisation d'une certaine température du catalyseur.

5. Procédé selon la revendication 4,
**caractérisé en ce qu'**
on choisit l'augmentation de la quantité d'air secondaire immédiatement après le début de l'acheminement d'air secondaire en fonction des conditions de démarrage de manière variable dans le temps.

6. Procédé selon l'une des revendications précédentes,
**caractérisé en ce que**
la modification dans le temps du mélange gras acheminé vers le moteur à combustion interne du véhicule est effectuée de la même manière que la modification dans le temps de la quantité d'air secondaire acheminée.
